# EUROPÄISCHE PATENTANMELDUNG

(11) **EP 0 806 449 A1**
(43) Veröffentlichungstag der Anmeldung: **12.11.1997**
(21) Anmeldenummer: 97107012.3
(22) Anmeldetag: 28.04.1997
(51) Int. Cl.: C08K 5/00, C08J 3/22, C08L 21/00

(54) **Polymercompounds und ihre Verwendung für die Vulkanisation halogenhaltiger Kautschuke**

(30) Priorität: 09.05.1996 DE 19618571
(71) Anmelder: BAYER AG, 51368 Leverkusen (DE)
(72) Erfinder: Schubart, Ruediger, Dr., 51467 Bergisch Gladbach (DE); Musch, Ruediger, Dr., 51467 Bergisch Gladbach (DE)

(57) **Zusammenfassung**

Die erfindungsgemäßen Polymercompounds aus speziellen Amidinen, Zink-Mercaptoverbindungen und Elastomeren eignen sich vorzüglich zur Herstellung thermostabiler halogenhaltiger Kautschuk-Vulkanisate. Die mittels der Polymercompounds erhaltenen Vulkanisate halogenhaltiger Kautschuke zeichnen sich durch eine verringerte Neigung zu unerwünschter Nachvulkanisation aus und sind bei hohen Lagertemperaturen stabil gegen thermischen und oxidativen Abbau.

## Beschreibung

Die Erfindung betrifft Polymercompounds aus Amidinen, Zink-Mercaptoverbindungen und Polymeren sowie deren Verwendung für die Vulkanisation halogenhaltiger Kautschuke. Die mittels der Polymercompounds erhaltenen Vulkanisate halogenhaltiger Kautschuke zeichnen sich durch eine verringerte Neigung zu unerwünschter Nachvulkanisation aus und sind bei hohen Lagertemperaturen stabiler gegen thermischen und oxidativen Abbau. Durch die Verwendung der genannten Polymercompounds werden darüber hinaus die physikalischen Eigenschaften der vulkanisierten Kautschuke positiv beeinflußt.

Polychloroprene lassen sich bekanntlich durch Behandlung mit z.B. Diaminen, Diphenolen, Thioharnstoffen und/oder Metalloxiden vulkanisieren. In der Regel hat man zwischen schwefelmodifizierten und nicht-schwefelmodifizierten Typen zu unterscheiden: Bei den erstgenannten ist die alleinige Verwendung von Metalloxiden meistens ausreichend, wogegen aufgrund der geringeren Vernetzungstendenz der nicht-schwefelmodifizierten Polychloroprene neben den ebenfalls erforderlichen Metalloxiden zusätzlich der Einsatz von speziellen Vulkanisationsbeschleunigern erforderlich ist; vgl. W. Hofmann, Vulkanisation & Vulkanisationshilfsmittel, Verlag Berliner Union GmbH, Stuttgart 1965, S. 274.

Als Metalloxide setzt man üblicherweise Zinkoxid als Vernetzungsmittel und Magnesiumoxid vorwiegend als Chlorakzeptor ein. Die alleinige Verwendung von Zinkoxid führt zu rascher An- und Ausvulkanisation, aber auch zu einer ungenügenden Vernetzung. Die alleinige Verwendung von Magnesiumoxid führt zwar zu sicherer Verarbeitbarkeit, leider aber auch zu einem sehr langsamen Vulkanisationsverlauf und zu sehr niedrigen Vulkanisationsgraden. Bei gleichzeitiger Verwendung von Magnesiumoxid und Zinkoxid erhält man eine synergistische Vulkanisierwirkung und bei einem geeignetem Mischungsverhältnis eine ausgewogene Kombination von Anvulkanisationszeit und erreichbarem Vulkanisationsgrad.

Trotzdem wird sowohl bei schwefelmodifizierten als auch bei nicht-schwefelmodifizierten Polychloroprenen das Optimum des Vulkanisationsgrades nicht erreicht, vielmehr findet eine allmählich ablaufende Nachvernetzung statt, die auch als Grund für das Alterungsverhälten von Polychloroprenvulkanisaten - vorzugsweise bei hoher thermischer Belastung und insbesondere bei zusätzlicher dynamischer Beanspruchung - anzusehen ist.

Durch den Zusatz von Alterungsschutzmitteln auf der Basis von Diphenylamin, Phenylendiamin, Phenol, Enolether oder Mercaptobenzimidazol läßt sich die Alterungsbeständigkeit verbessern, wobei Mercaptobenzimidazol die Lagerbeständigkeit der nicht vulkanisierten Mischung deutlich reduziert.

Weiterhin wird in DE-A 39 42 463 ein Verfahren beschrieben, wonach die Stabilität von Polychloropren-Vulkanisaten durch die Gegenwart von Amidinen und von Metalloxid, das frei von Magnesiumoxid ist, günstig beeinflußt wird. Die resultierenden Vulkanisate altern weniger stark, was an einem verringerten Abfall der mechanischen Eigenschaften zu erkennen ist. Durch dieses Verfahren wird jedoch ebenfalls die Lagerfähigkeit von Mischungen ungünstig beeinflußt, d.h. Anvulkanisationszeit und Scorchzeit werden deutlich kurzer. Dies wird besonders bei Mischungen deutlich, die schwefelmodifiziertes Polychloropren enthalten.

Durch den Zusatz von Compounds aus Amidinen und Mercaptoverbindungen auf polymeren Trägern läßt sich diese ungünstige Lagerfähigkeit der Mischungen verbessern (siehe DE-A 19534621).

Überraschenderweise wurde nun gefunden, daß der Zusatz von polymergebundenen Blends aus Amidinen und bestimmten Zink-Mercaptoverbindungen sowohl die Lagerfähigkeit der unvulkanisierten Mischungen als auch die Alterungsbeständigkeit der Vulkanisate gegenüber den oben beschriebenen Verfahren deutlich verbessern. Darüber hinaus wird das Eigenschaftsbild der vulkanisierten Kautschuke günstig beeinflußt.

Gegenstand der vorliegenden Erfindung sind also Polymercompounds bestehend aus
a) cyclischen und/oder acyclischen Amidinen,
b) Zinksalzen von Mercaptoverbindungen des Benzothiazols, Benzoimidazols, Benzopyrimidins und/oder des Benzotriazins und
c) Ethylen/Propylen-Kautschuken (EP(D)M), Ethylenvinylacetat-Kautschuken (EVM), Butadienkautschuken (BR), Styrol-Butadien-Kautschuken (SBR), Naturkautschuken (NR), Butadien Acrylnitril-Kautschuk (NBR) und/oder Butylkautschuken (IIR),
wobei im Compound die Komponenten a) und b) im Molverhältnis von 0,25:1 bis 2:1, bevorzugt 0,5:1 bis 1,5:1, vorliegen und der Anteil des Polymerbinders c) 90 bis 10 Gew.%, bevorzugt 30 bis 60 Gew.%, bezogen auf das Gesamtgewicht der Komponenten a) bis c), beträgt.

Als cyclische oder acyclische Amidine können für die erfindungsgemäßen Polymercompounds Amidine gemäß DE-A 3 942 463 verwendet werden, wobei Verbindungen der dort beschriebenen allgemeinen Formeln III und IV bevorzugt sind. Ganz besonders bevorzugt ist die Verwendung von 1,5-Diazabicyclo - (5.4.0)-undecen-(11) (DBU) oder 1,5-Diazabicyclo-(4.3.0)nonen-(5) (DBN). Natürlich können die Amidine auch als Adsorbate auf organischen oder anorganischen Trägern, z.B. Kaolin, Kreide oder Aktivkohle, in fester Form zudosiert werden.

Als Zinksalze von Mercaptoverbindungen kommen Zink-Mercaptoverbindungen des Benzothiazols, Benzoimidazols, Benzopyrimidins und/oder Benzotriazins in Frage. Bevorzugt werden die Zink-Mercaptoverbindungen des Benzothiazols, des Benzoimidazols und des 4,5-Methylbenzoimidazols eingesetzt, wobei Zink-Mercaptobenzimidazol und Zink-4-methyl- oder Zink-5-methyl-mercaptobenzimidazol oder Gemische besonders bevorzugt sind.

Als Polymerkomponenten c) kommen besonders EP(D)M und EVM in Frage.

Die Komponenten a) bis c) können jeweils sowohl einzeln als auch in beliebigen Mischungen untereinander eingesetzt werden. Falls Mischungen von Amidinen a), Zink-Mercaptoverbindungen b) oder Polymeren c) untereinander eingesetzt werden, kann das jeweils günstigste Mischungsverhältnis leicht durch entsprechende Vorversuche ermittelt werden. Dieses richtet sich dann auch nach dem erwünschten Eigenschaftsbild der herzustellenden Vulkanisate.

Die Herstellung der erfindungsgemäßen Polymercompounds kann in üblicher Weise durch Mischen der Komponenten a) bis c) in üblichen Mischaggregaten, wie Innenmischer, Extruder oder Walze, erfolgen, wobei den Komponenten a) bis c) noch andere Kautschukhilfsmittel oder Trägermaterialien, wie Ruß, Kreide, Kaolin, Kieselsäure, Weichmacher, Farbstoffe, Biocide und/oder Vulkanisationsbeschleuniger zugemischt werden können. Nach Abmischen der Komponenten a) bis c) in den üblichen Mischaggregaten werden die Polymercompounds anschließend in entsprechende übliche Gebrauchsformen, wie Granulat, überführt.

Gegenstand der vorliegenden Erfindung ist außerdem die Verwendung der oben beschriebenen Polymercompounds bei der Vulkanisation halogenhaltiger Kautschuke, alleine oder in Kombination mit anderen Kautschuken. Dabei werden die erfindungsgemäßen Polymercompounds in einer Menge von 0,1 bis 20 Gew.-Teile./100 Gew.-Teile Kautschuk eingesetzt.

Bevorzugte halogenhaltige Kautschuke, die mit den erfindungsgemäßen Polymercompounds vor der Vulkanisation abgemischt werden können, sind Polychloroprenkautschuke, Chlorbutylkautschuke, Brombutylkautschuke, chloriertes Polyethylen, chlorsulfoniertes und alkyliertes Polyethylen und/oder chloriertes Polybutadien, bevorzugt Polychloroprene und Chlor- sowie Brombutyl-Kautschuke und deren Gemische. Die halogenhaltigen Kautschuke sind bekannt und beispielsweise beschrieben in: "The Synthetic Rubber Manual, 11. Auflage. Internat. Institute of Synthetic Rubber Producers Inc. Houston/Texas" und "Ullmann's Encylopedia of Industrial Chemistry, Vol A23, 1993, 239-365".

Erfindungsgemäß werden die Polymercompounds mit den halogenhaltigen Kautschuken vor der Vulkanisation auf üblichen Mischaggregaten gemischt. Bevorzugte Mischaggregate sind die in der Kautschukindustrie üblichen Kneter, Walzen und Mischextruder, die in der Regel mit Scherraten von 1 bis 1.000 sec⁻¹, vorzugsweise 1 bis 200 sec⁻¹, arbeiten.

Die Vulkanisation kann bei Temperaturen von 20 bis 250°C, vorzugsweise 140 bis 210°C, gegebenenfalls unter einem Druck von 10 bis 200 bar, erfolgen.

Die erfindungsgemäß hergestellten Vulkanisate können überall dort mit Vorteil eingesetzt werden, wo hohe thermische Belastung und dynamische Beanspruchung das Risiko frühzeitiger Alterung mit sich bringen, beispielsweise also bei Achsmanschetten, Keilriemen, Zahnriemen, Fördergurte, Puffer, Federelemente sowie Kühlerschläuche.

### Beispiele

**Tabelle 1**

| **Einsatzstoffe zur Herstellung der erfindungsgemäßen Beispiele und der Vergleichsbeispiele** | |
|---|---|
| **Einsatzstoffe** | **Verwendetes Material**^{**1)**} |
| 1,5-Diaza-bicyclo-(5.4.0)-undecen-(11) | DBU |
| 4/5-Methyl-mercaptobenzimidazol(Gemisch) | Vulkanox MB 2 |
| Zinksalz des 4/5-Methyl-mercaptobenzimidazols (Gemisch) | Vulkanox ZMB-2 |
| EPDM-Polymer | AP 470 |
| | AP 147 |
| EVM-Polymer | Levapren 452 K |
| Polychloropren-Allzwecktyp | Baypren 210 |
| Brombutyl-Polymer | Brombutyl X2 |

| | |
|---|---|
| ¹⁾ Verkaufs- und Handelsprodukte der Bayer AG und deren Tochterfirmen | |

### Herstellung der Compounds

### Batch-Verfahren:

Auf einem kühlbaren Walzwerk wurden bei 40°C, einer Friktion von 1:1,2 (20:24 UpM) und einem Walzenspalt von 0,4 mm zuerst das Polymer mastiziert bis sich ein geschlossenes Walzfell bildete. Danach wurden die Mercaptoverbindung und dann das Amidin zugesetzt und eingemischt. Nachdem sich beide Substanzen gleichmäßig verteilt hatten, wurde das Walzfell dünn ausgezogen und das Material zerkleinert. Die so hergestellten Batche sind in Tabelle 2 Nr. D-G zusammengestellt.

### Kontinuierliche Herstellung:

In einer Zweiwellenschnecke vom Typ ZSK 32 mit Düsenaustrag wurden die 3 Komponenten kontinuierlich, bei Temperaturen bis 100°C zugegeben, bei 60 UpM gemischt und über die Düse als Strang ausgetragen. Der Produktstrang wurde mit Stickstoff gekühlt, granuliert und schwach talkumiert. Die so hergestellten Compounds sind in Tab. 2 unter Beispiel A-C aufgeführt.

**Tabelle 2**

| **Erfindungsgemäße Beispiele** | | | | | | |
|---|---|---|---|---|---|---|
| Nr. | Polymer | Menge g | Mercaptoverbindung | Menge in g / mol | Amidin | Menge in g / mol |
| A*) | AP 470 | 1500 | Vulkanox-MB-2 | 815/4,9 | DBU | 675/4,4 |
| B | AP 470 | 1500 | Vulkanox-ZMB-2 | 815/2,08 | DBU | 675/4,4 |
| C | AP 470 | 1500 | Vulkanox-ZMB-2 | 815/2,08 | DBU | 316/2,08 |
| D*) | AP 147 | 20 | Vulkanox-MB-2 | 75/0,45 | DBU | 50/0,32 |
| | Levapren 452K | 80 | | | | |
| E | AP 147 | 20 | Vulkanox-ZMB-2 | 175/0,45 | DBU | 50/0,32 |
| | Levapren 452K | 80 | | | | |
| F*) | Levapren 452K | 100 | Vulkanox-MB-2 | 75/0,45 | DBU | 50/0,32 |
| G | AP 147 | 20 | Vulkanox-ZMB-2 | 200/0,51 | DBU | 50/0,32 |
| | Levapren 452K | 80 | | | | |

| | | | | | | |
|---|---|---|---|---|---|---|
| *) Vergleichsbeispiele | | | | | | |

Im folgenden werden an Hand von Standard- und artikelspezifischen Rezepturen die erfindungsgemäßen Vorteile im Vergleich zum Stand der Technik erläutert.

### Mischungsherstellung, Vulkanisation und Vulkanisatprüfung (Sie erfolgten unter Anlehnung an die ISO-Vorschrift 2475-1975 (E).)

Vor der eigentlichen Mischungsherstellung wurden 1.000 g Polychloropren 6 Min. lang mastiziert, wobei der Walzenspalt so eingestellt war, daß sich eine Wulst mit einem Durchmessser von ca. 12 mm bildete. Nach der Mastikation wurden 800 g Kautschuk abgenommen und mindestens 10, höchstens 120 Min. lang gelagert.

| | |
|---|---|
| Walzwerk: | 200 x 390 mm |
| Temperatur: | 45 - 55 °C |
| Friktion: | 1:1,4 (24 : 34 U/min) |

Vor Beginn des Mischens wurde auf das 30 °C eingestellte Walzwerk mittels Abfallkautschuk auf die angegebene Untergrenze der Betriebstemperatur erwärmt.

Mischfolge und -zeiten entsprachen den obigen Angaben. Nach einer Mischzeit von 13 Min. wurde das Walzfell unter wechselseitigem Einschneiden (dreimal links und dreimal rechts) 1 Min. bearbeitet und innerhalb weiterer 2 Min. sechsmal durch einen 0,8 mm breiten Walzenspalt gezogen, so daß sich eine Gesamtmischzeit von 16 Min. ergab.

Die Mischung wurde bis zur Vulkanisation über Nacht gelagert.

Die Prüfdaten wurden nach den entsprechenden DIN-Vorschriften für Weichgummi ermittelt und sind in Tabelle 3 zusammengestellt worden.

**Tabelle 3**

| Prüfnormen für Gummiwerkstücke: | | |
|---|---|---|
| **Eigenschaft** | **Einheit** | **DIN-Prüfmethode** |
| *Polymer/Mischung :* | | |
| Mooney - Viskosität | ME | 53523 |
| Mooney - Scorchzeit | min | 53523 |
| Rheometer (Monsanto MDR 2000) | min | 53529 |

| *Vulkanisatwerte :* | | |
|---|---|---|
| Festigkeit | MPa | 53504 |
| Dehnung | % | 53504 |
| Modul | MPa | 53504 |
| Härte | Shore A | 53505 |
| Heißluftalterung | verschieden | 53508 |

### Lagerstabilität von Mischungen und Vulkanisaten (Tabelle 4)

Im Vergleich zur Standardrezeptur gemäß ISO 2475 (Beispiel 1) ist eine MgO freie Standardmischung bei Zugabe von Vulkanox MB-2, Vulkanox ZMB-2 oder DBU nicht lagerfähig (Beispiele 2 bis 4). Durch die Kombination DBU/Vulkanox MB-2 im Beispiel 5 wird die Lagerstabilität etwas verbessert.

Hier führt die erfindungsgemäße Herstellung als DBU/Vulkanox ZMB-2 Batch und Zusatz in der Mischung (Beispiele 6, 7) zu einer deutlich lagerstabileren Mischung, ersichtlich am langsaameren Anstieg der Mooney-Viskosität und der Scorchzeiten (MS-t5) bei 120°C und 130°C. Bei vergleichbarer Lagerstabilität (Beispiele 1, 6, 7) wird durch den erfindungsgemäßen Compound die Heißluftalterung der Vulkanisate erheblich verbessert.

### Wirksamkeit des erfindungsgemäßen Compounds (Tabelle 5)

Gegenüber dem Compound auf Basis DBU/Vulkanox MB-2 (Beispiel 8) verbessert der erfindungsgemäße Compound (Beispiel 9) die Lagerfähigkeit der Mischung und führt zu einer schnelleren Ausvulkanisation. Bei vergleichbarem mechanischem Wertebild wird die Heißluftbeständigkeit deutlich verbessert.

### Wirksamkeit der Compounds bei Brombutylkautschuk (Tabelle 6)

Wie bei Polychloropren bewirkt auch bei anderen Halogenkautschuken, z.B. bei Brombutylkautschuk, der Zusatz des erfindungsgemäßen Compounds in Beispiel 11 gegenüber einer anderen Stabilisatorkombination (Beispiel 10) eine Verbesserung der Lagerfähigkeit der beschleunigten Mischung (MS-t %/120°C), eine schnellere Ausvulkanisation und eine bessere Heißluftstabilität.

**Tabelle 4a**

| Lagerstabilität von Mischungen und Vulkanisaten | | | | | | | | |
|---|---|---|---|---|---|---|---|---|
| Nr. | | 1* | 2* | 3* | 4* | 5* | 6 | 7 |
| | | | | | | | | |

| **Rezeptur** | | | | | | | | |
|---|---|---|---|---|---|---|---|---|
| Baypren | | 100 | 100 | 100 | 100 | 100 | 100 | 100 |
| Stearinsäure | | 0,5 | 0,5 | 0,5 | 0,5 | 0,5 | 0,5 | 0,5 |
| Ruß N 772 | | 30 | 30 | 30 | 30 | 30 | 30 | 30 |
| MgO Paste | | 5,3 | - | | - | - | - | |
| Vulkanox MB-2 | | - | 1,0 | | - | - | - | |
| Vulkanox ZMB-2 | | - | - | 1,0 | - | | - | |
| DBU | | - | - | | 1,0 | | - | |
| Compound A | | - | - | | - | 4,4 | | |
| Compound B | | | | | | | 4,4 | |
| Compound C | | | | | | | | 6,0 |
| ZnO | | 5,0 | 5,0 | 5,0 | 5,0 | 5,0 | 5,0 | 5,0 |
| Vulkacit NPV/C | | 0,5 | 0,5 | 0,5 | 0,5 | 0,5 | 0,5 | 0,5 |

| Mischungseigenschaften: Lagerung bei Raumtemperatur und Scorchverhalten **ML-1+4/100°C** | | | | | | | | |
|---|---|---|---|---|---|---|---|---|
| 0 Tage | [ME] | 53,4 | 69,0 | 66,2 | 49,6 | 58,3 | 50 | 52,2 |
| 21 Tage | [ME] | 57,4 | >200 | 84 | 63,3 | 67,2 | 54,5 | 56,5 |
| Diff. 0-21 Tage | [ME] | 4,0 | >130 | 18 | 13,6 | 8,9 | 4,5 | 4,3 |
| MS-t5/120°C | min | 10,1 | 5,9 | 7,3 | 8,8 | 9,8 | 10,2 | 11 |
| MS-t5/130°C | min | 6,6 | 4,0 | 5,2 | 5,9 | 6,4 | 6,7 | 7,3 |

| | | | | | | | | |
|---|---|---|---|---|---|---|---|---|
| *) Vergleichsbeispiel | | | | | | | | |

**Tabelle 4b**

| Lagerstabilität von Mischungen und Vulkanisaten | | | | | | | | |
|---|---|---|---|---|---|---|---|---|
| Nr. | | 1* | 2* | 3* | 4* | 5* | 6 | 7 |
| | | | | | | | | |

| **Rezeptur** | | | | | | | | |
|---|---|---|---|---|---|---|---|---|
| Baypren | | 100 | 100 | 100 | 100 | 100 | 100 | 100 |
| Stearinsäure | | 0,5 | 0,5 | 0,5 | 0,5 | 0,5 | 0,5 | 0,5 |
| Ruß N 772 | | 30 | 30 | 30 | 30 | 30 | 30 | 30 |
| MgO Paste | | 5,3 | - | | - | - | - | |
| Vulkanox MB-2 | | - | 1,0 | | - | - | - | |
| Vulkanox ZMB-2 | | - | - | 1,0 | - | | - | |
| DBU | | - | - | | 1,0 | | - | |
| Compound A | | - | - | | - | 4,4 | | |
| Compound B | | | | | | | 4,4 | |
| Compound C | | | | | | | | 6,0 |
| ZnO | | 5,0 | 5,0 | 5,0 | 5,0 | 5,0 | 5,0 | 5,0 |
| Vulkacit NPV/C | | 0,5 | 0,5 | 0,5 | 0,5 | 0,5 | 0,5 | 0,5 |

| **Vulkanisateigenschaften: Heißluftalterung, 14 und 21 Tage bei 100°C, Normstab S-2** **Änderung mechanischer Werte** | | | | | | | | |
|---|---|---|---|---|---|---|---|---|
| 14d Modulansteig | (%) | 272 | 94 | 205 | 159 | 23 | 20 | 17 |
| 14d Härteanstieg | Shore A | 15 | 7 | 13 | 13 | 2 | 1 | 0 |
| 21d Modulanstieg | (%) | | | 344 | 286 | 50 | 44 | 10 |
| 21d Härteanstieg | Shore A | | | 20 | 20 | 10 | 8 | 2 |

| | | | | | | | | |
|---|---|---|---|---|---|---|---|---|
| *) Vergleichsbeispiel | | | | | | | | |

**Tabelle 5**

| Wirksamkeit der erfindungsgemäßen Compounds auf Polychloropren-Vulkanisate | | | |
|---|---|---|---|
| Nr. | | 8*) | 9 |
| | | | |

| **Rezeptur** | | | |
|---|---|---|---|
| Baypren 210 | | 100 | 100 |
| Stearinsäure | | 0,5 | 0,5 |
| Ruß N 772 | | 30 | 30 |
| Zinkweiß RS | | 5,0 | 5,0 |
| Vulkacit NPV/C | | 0,5 | 0,5 |
| Compound/(Polymerbasis EPDM/EVM = 20/80) | | | |
| Compound D | | 4,5 | - |
| Compound E | | - | 6,5 |

| **Mischungseigenschaften** | | | |
|---|---|---|---|
| MS-t5/120°C | (min) | 9,8 | 10,2 |
| MS-t5/130°C | (min) | 6,1 | 7,8 |

| **Monsanto MDR 2000/150°C** | | | |
|---|---|---|---|
| t₁₀ | (min) | 2,3 | 2,1 |
| t₈₀ | (min) | 17,6 | 14,1 |
| t₉₀ | (min) | 27,3 | 21,7 |

| **Vulkanisateigenschaften: Normstab S-2** **Heizzeit: 150°C/t90 + 5 min** | | | |
|---|---|---|---|
| Zugfestigkeit | (MPa) | 23,9 | 23,6 |
| Bruchdehnung | (%) | 501 | 516 |
| Spannungswert S100 | (MPa) | 2,7 | 3,1 |
| Spannungswert S200 | (MPa) | 6,6 | 7,0 |
| Spannungswert S300 | (MPa) | 13,5 | 13,2 |
| Härte 23°C | (Shore A) | 64 | 67 |

| **HL-Alterung bei 100°C: Normstab S-2** | | | |
|---|---|---|---|
| 7d S.-Anstieg | (%) | 14 | 6 |
| 7d H.-Anstieg | (Shore A) | 0 | 0 |
| 14d S.-Anstieg | (%) | 118 | 45 |
| 14d H.-Anstieg | (Shore A) | 8 | 5 |
| 21d S.-Anstieg | (%) | 181 | 148 |
| 21d H.-Anstieg | (Shore A) | 11 | 10 |

| | | | |
|---|---|---|---|
| *) Vergleichsbeispiel | | | |

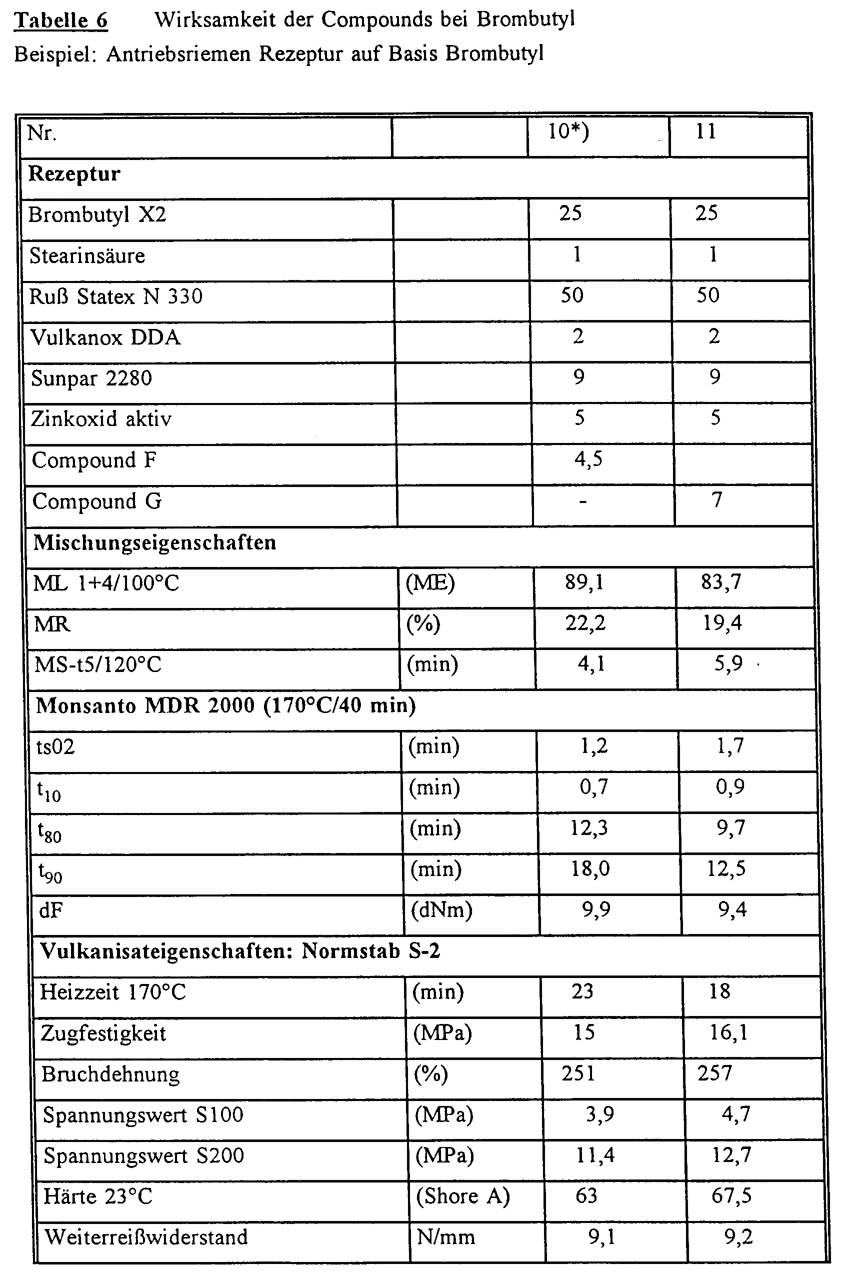

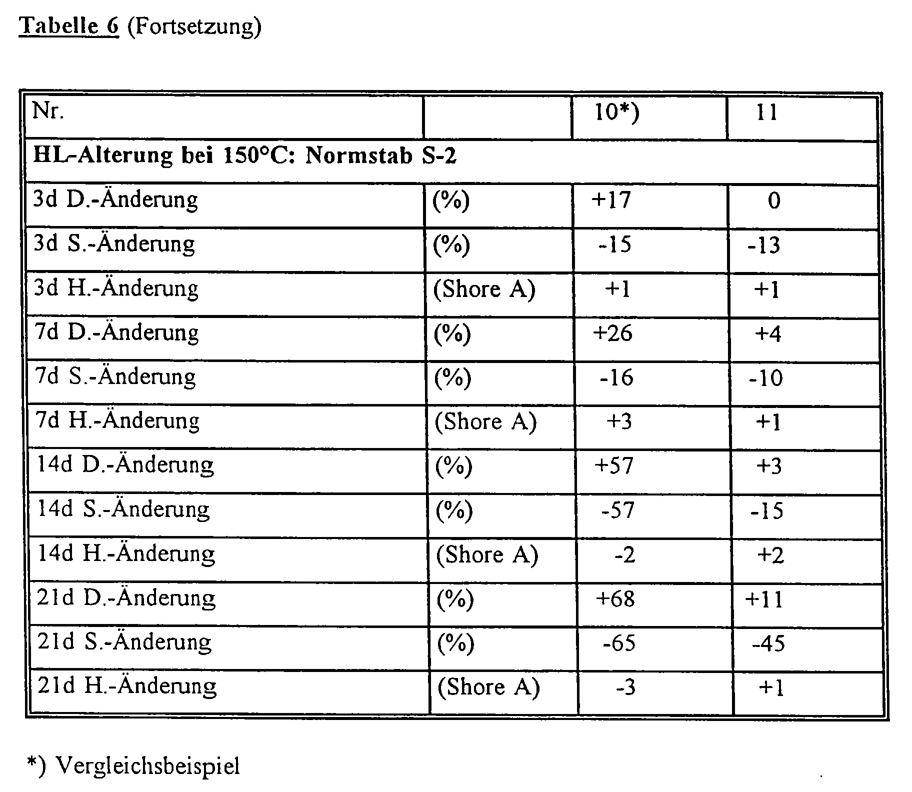

## Patentansprüche

1. Polymercompounds bestehend aus
a) cyclischen und/oder acyclischen Amidinen,
b) Zinksalzen von Mercaptoverbindungen des Benzothiazols, Benzoimidazols, Benzopyrimidins und/oder des Benzotriazins und
c) Ethylen-Propylen-Kautschuken (EPM), Ethylen-Propylen-Dien-Kautschuken (EPDM), Ethylenvinylacetat-Kautschuken (EVM), Butadienkautschuken (BR), Styrol-Butadien-Kautschuken (SBR), Naturkautschuken (NR), Butadien Acrylnitril-Kautschuke (NBR) und/oder Butylkautschuken (IIR),
wobei die Komponenten a) und b) im Molverhältnis von 0,25:1 bis 2:1 vorliegen und der Anteil des Polymerbinders c) 90 bis 10 Gew.%, bezogen auf das Gesamtgewicht der Komponenten a) bis c), beträgt.

2. Verwendung der Polymercompounds nach Anspruch 1 bei der Vulkanisation halogenhaltiger Kautschuke.
